# FASCICULE DE BREVET EUROPEEN

(11) **EP 0 559 624 B1**
(45) Date de publication et mention de la délivrance du brevet: **02.08.1995**
(21) Numéro de dépôt: 93830069.6
(22) Date de dépôt: 24.02.1993
(51) Int. Cl.: B60R 3/02

(54) **Dispositif d'actionnement de la rotation d'un marchepied pour véhicules**
Schwenkbetätigungsvorrichtung einer Trittstufenanordnung für Fahrzeuge
Step assembly rotation activation device for vehicles

(30) Priorité: 03.03.1992 IT FI920055
(43) Date de publication de la demande: 08.09.1993
(73) Titulaire: Nardini, Davide, I-50019 Sesto Fiorentino (Firenze) (IT)
(72) Inventeur: Nardini, Davide, I-50019 Sesto Fiorentino (Firenze) (IT)
(74) Mandataire: Martini, Lazzaro

(56) Documents cités:
- EP-A- 0 447 372
- US-A- 4 110 673

## Description

La présente invention a pour objet un escalier escamotable pour véhicules tels que, par exemple, des camping-cars, caravanes, etc., et se réfère plus précisément à un dispositif d'actionnement de la rotation des marches de cet escalier.

On connaît différents types de marches individuelles ou d'escaliers à plusieurs marches utilisés pour l'accès à des véhicules en stationnement, comme par exemple des trains, des camping-cars, caravanes, etc., destinés à être automatiquement ramenés sous le véhicule avec que ce dernier ne reparte.
Normalement, le mouvement qui amène l'escalier ou la marche d'une position de service à une position de repos sous le véhicule est réalisé par des dispositifs d'actionnement qui commandent un coulissement dans des guides et/ou une rotation autour d'axes solidaires du véhicule lui-même.

En particulier, un type connu d'escalier comprend deux marches dont celle supérieure est solidaire d'un axe de rotation tournant autour d'un support fixé sur le véhicule, alors que la marche inférieure est montée coulissante dans des guides solidaires avec la marche supérieure. Un dispositif d'actionnement commande la rotation de l'axe et, par conséquent, la rotation de la marche supérieure qui vient se placer à l'intérieur du support et sous le véhicule, alors que la marche inférieure, après que les guides ont accompli un certain angle avec la marche supérieure par gravité, coulisse dans les guides en venant se placer à l'abri de la marche supérieure et en donnant à l'escalier une position d'encombrement minimum sous le véhicule. Au terme de la rotation qui amène les marches en position de repos, les guides sont sensiblement verticaux, alors qu'en position de service, les guides sont en position inclinée vers le bas pour faciliter le coulissement par gravité de la marche inférieure dans une position d'écartement maximum par rapport à la marche supérieure.
La rotation de l'axe solidaire avec la marche supérieure est effectuée avec un dispositif d'actionnement linéaire qui agit sur un levier en saillie sur les côtés du support qui fait accomplir à l'escalier une rotation d'environ 120°. Le document EP-A-0 447 372 décrit un tel type de dispositif selon les caractéristiques du préambule de la revendication 1.
Ce type d'escalier, bien qu'étant simple et muni d'une double marche qui permet de monter ou descendre du véhicule avec une plus grande facilité par rapport à une marche unique, présente comme inconvénient que la marche inférieure se coince souvent dans les guides en empêchant, en particulier, l'escalier de se déplacer dans la position de repos et en nécessitant l'intervention de l'utilisateur pour son déblocage.

Le but de la présente invention est justement de fournir un dispositif d'actionnement de la rotation d'un escalier pour véhicules du type précité capable de remédier aux inconvénients indiqués ci-dessus en garantissant, en particulier, le coulissement de la marche inférieure dans les guides solidaires avec la marche supérieure durant les phases d'ouverture et de fermeture de l'escalier.

Ce résultat a été atteint grâce au dispositif d'actionnement, conformément à la présente invention, dont la caractéristique consiste dans le fait que les guides, avec lesquels la marche supérieure est solidaire, sont connectés de manière tournante avec un arbre entraîné en rotation par des moyens motorisés fixés sur un support solidaire du véhicule. Il est prévu des moyens articulés, connectés de manière fonctionnelle avec l'arbre et la marche inférieure, destinés à déplacer la marche le long des guides et à entraîner en rotation les guides autour de l'arbre. De préférence, les moyens articulés comprennent au moins un bras calé sur l'arbre et connecté de manière tournante avec une bielle montée sur pivot sur la marche inférieure. La bielle, par suite de la rotation du bras, entraîne la marche inférieure le long des guides jusqu'à ce que la bielle elle-même vienne en butée contre l'arbre en entraînant également en rotation la marche supérieure et les guides.

En outre, des moyens d'engagement et respectivement de dégagement de la transmission du mouvement audit arbre d'entraînement des marches sont prévus, pour permettre l'entraînement manuel en cas de panne desdits moyens à moteur.

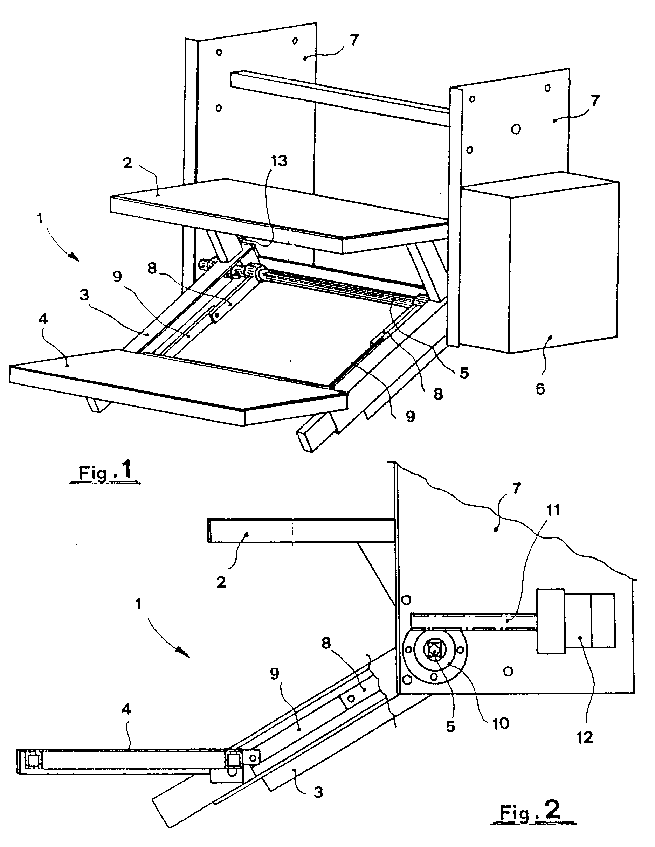

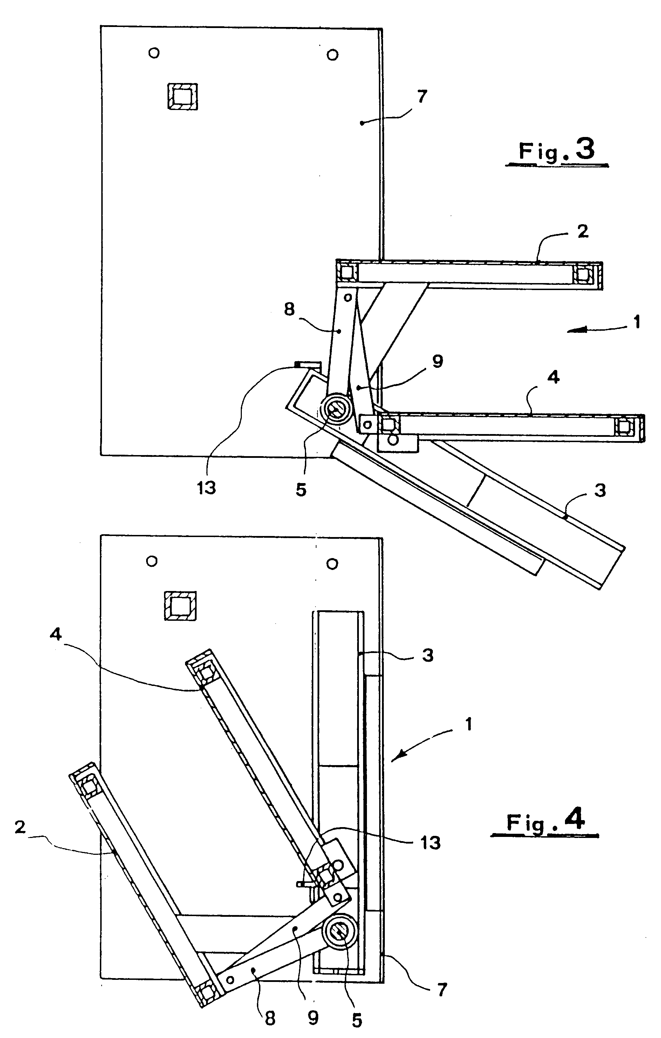

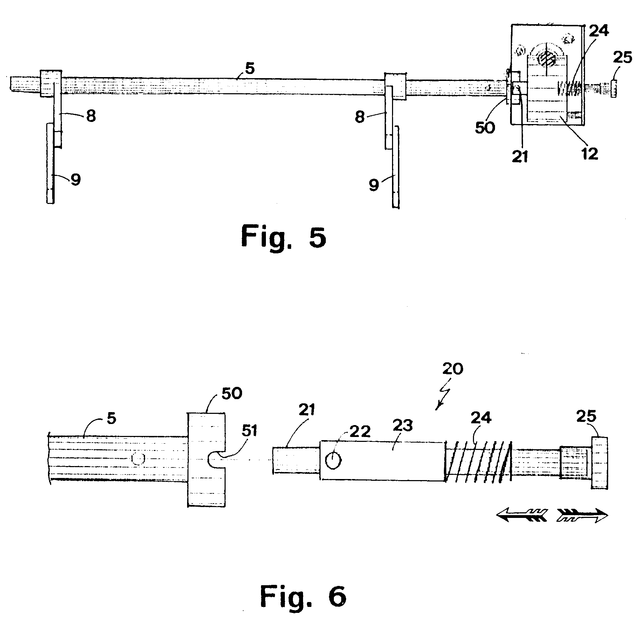

D'autres avantages et caractéristiques du dispositif d'actionnement selon la présente invention découleront de manière plus claire de la description qui suit d'une forme de réalisation, donnée à titre d'exemplification et non pas dans le sens limitatif; avec référence aux dessins annexés sur lesquels: la figure 1 représente une vue en perspective d'un dispositif d'actionnement conformément à la présente invention, appliqué à un escalier à deux marches en position ouverte; la figure 2 représente une vue de côté du dispositif de la figure 1 avec vue schématique de la transmission du mouvement à l'arbre de rotation; la figure 3 représente une vue de côté du dispositif d'actionnement selon l'invention avec l'escalier partiellement escamoté; la figure 4 représente le dispositif selon l'invention avec l'escalier en position complètement escamotée; la figure 5 représente la vue en plan simplifiée du dispositif de la figure 1, avec les moyens d'engagement de la transmission dans la condition active; la figure 6 représente la vue détaillée des moyens de la figure 5 dans la condition d'arbre libre.

En référence à la figure 1, un dispositif d'actionnement de la rotation, conformément à l'invention, est appliqué à un escalier 1 pour véhicules comprenant une marche supérieure 2 solidaire avec des guides 3 dans lesquels s'engage de manière coulissante une marche inférieure 4.
Selon l'invention, les guides 3 sont connectés de manière tournante à un arbre 5 entraîné en rotation par un groupe moteur 6 fixé sur un support 7 solidaire d'un véhicule non représenté. Sur l'arbre 5 sont calés deux bras 8, connectés de manière tournante à des bielles 9, elles-mêmes montées sur pivot sur la marche inférieure 4.
En référence à la figure 2, l'arbre 5 est, par exemple, entraîné en rotation par le groupe motorisé 6 par l'intermédiaire de l'accouplement d'une roue hélicoïdale 10 avec une vis sans fin 11 mise en rotation par un motoréducteur électrique 12.
En référence à la figure 3, une rotation de l'arbre 5 provoque une rotation des bras 8 qui entraînent dans leur mouvement les bielles 9 qui, à leur tour, font coulisser la marche 4 dans les guides 3. Tant que la bielle 9 ne vient pas en butée contre l'arbre 5, la marche 2 reste immobile et la marche 4 accomplit sa translation le long des guides 3. Après que la bielle 9 est arrivée en butée contre l'arbre 5, la rotation de ce dernier n'est plus empêchée du fait que les guides 3 sont connectés de manière tournante avec l'arbre 5 sans aucun autre engagement, ce pourquoi l'arbre 5, par l'intermédiaire de la bielle 9, entraîne en rotation également la marche supérieure 2 et les guides 3 jusqu'à la position représentée sur la figure 4, avec les guides 3 sensiblement verticaux. Par rapport à la position de la figure 4, l'escalier 1 ne peut pas continuer à tourner en raison d'une butée d'arrêt 13 fixée sur le support 7 contre laquelle les guides 3 viennent en butée. De manière analogue, la butée 13 empêche toute rotation supplémentaire par rapport à la position des figures 1 et 3 en ce que les guides 3 viennent en butée sur celle-ci, en correspondance de la position horizontale des marches 2 et 4.
Le dispositif d'actionnement, conformément à l'invention, résoud donc le problème de coulissement de la marche inférieure 4 dans les guides 3 par rapport à l'escalier de type connu mentionné ci-dessus. La présence du groupe moteur 6, par rapport à un dispositif d'actionnement linéaire, permet une rotation supérieure à 180° à la manivelle 8, nécessaire pour faire accomplir la translation de la marche 4 et la rotation des guides 3. Le mécanisme à manivelle composé des bras 8 et des bielles 9, en particulier, empêche que la marche 4 ne s'inverse par rapport aux guides 3 ou ne se coince dans ces derniers à cause d'une accumulation de saleté.

Avantageusement, comme protection contre les accidents, le groupe moteur 6 est équipé d'un limiteur de couple pour empêcher qu'un quelconque corps étranger, venant heurter la marche 4 ou les guides 3 pendant leur mouvement, ne puisse être endommagé et/ou endommager l'escalier 1.

Par ailleurs, avantageusement, la commande du groupe moteur 6 pour l'ouverture ou la fermeture de l'escalier 1 peut être actionnée directement de la cabine de conduite du véhicule.

Avantageusement, conformément à l'invention et en référence aux figures 5 et 6 des dessins annexés, pour permettre l'extraction et l'escamotage manuel des marches (2,4) en cas d'urgence, c'est-à-dire de blocage du motoréducteur (12) ou de panne de l'installation électrique de commande correspondante, il est prévu un dispositif (20) de dégagement de l'arbre (5), lequel comprend un profilé métallique horizontal (21), ayant une section transversale à développement carré; ce profilé, d'un côté, est connecté au motoréducteur (12) et, de l'autre côté, peut être inséré dans une bague (50) solidaire de l'extrémité de l'arbre (5) qui se trouve du côté du motoréducteur (12) et munie d'une rainure radiale (51) destinée à loger, dans la condition d'engagement de la transmission, une goupille (21) supportée en saillie par un manchon (23), lequel est enfilé sur ledit profilé (21). Une poignée (25) est prévue, solidaire de l'extrémité libre dudit profilé (21), pour en permettre l'actionnement manuel.
De cette manière, la transmission du mouvement par le motoréducteur (12) à l'arbre (5) est réalisée par l'intermédiaire du dispositif (20). L'extraction de la poignée (25), dans la direction de son éloignement par rapport à l'arbre (5), provoque la sortie de la goupille (22) hors du siège (51) de la bague (50) et, par conséquent, le dégagement de l'arbre (5), de manière à permettre son entraînement à la main. Le relâchement de la poignée (25) entraîne l'engagement de la transmission sous l'effet du ressort (24), lequel provoque le réenclenchement de la goupille (22) dans la rainure (51) de la bague (50).

## Revendications

1. Dispositif d'actionnement de la rotation d'un escalier (1) pour véhicule tels que, par exemple, des camping-cars, caravanes, etc., ledit escalier comprenant une marche supérieure (2) solidaire avec des guides (3) dans lesquels s'engage de manière coulissante une marche inférieure (4), caractérisé en ce que lesdits guides (3), avec lesquels ladite marche supérieure (2) est solidaire, sont connectés de manière tournante avec un arbre (5) entraîné en rotation par des moyens motorisés (6) fixés sur un support (7) solidaire dudit véhicule, des moyens articulés (8,9), connectés de manière fonctionnelle avec l'arbre (5) et la marche inférieure (4), étant prévus pour déplacer ladite marche le long desdits guides (3) et entraîner en rotation lesdits guides (3) autour dudit arbre (5).

2. Dispositif d'actionnement selon la revendication 1, dans lequel lesdits moyens articulés (8,9) comprennent au moins un bras (8), calé sur ledit arbre (5) et connecté de manière tournante avec une bielle (9) montée sur pivot sur ladite marche inférieure (4), ce pourquoi ladite bielle (9), par suite de la rotation dudit bras (8), entraîne ladite marche inférieure (4) le long desdits guides (3) jusqu'à ce que ladite bielle (9) vienne en butée contre ledit arbre (5) en entraînant en rotation également ladite marche supérieure (2) et lesdits guides (3).

3. Dispositif d'actionnement de la rotation d'un escalier selon les revendications 1 et 2, dans lequel lesdits bras (8) calés sur ledit arbre (5) et lesdites bielles (9) sont au nombre de deux.

4. Dispositif d'actionnement selon les revendications précédentes, dans lequel lesdits moyens motorisés comprennent un motoréducteur (6) avec transmission du mouvement audit arbre (5) au moyen d'un accouplement à vis sans fin et roue hélicoïdale.

5. Dispositif d'actionnement de la rotation selon les revendications précédentes, dans lequel, dans ledit moteur (6), sont prévus des moyens limiteurs de couple pour la protection contre les accidents.

6. Dispositif selon les revendications 1 et 4, caractérisé en ce qu'il comprend des moyens pour l'engagement et respectivement le dégagement de l'arbre (5) d'entraînement des marches comprenant un profilé métallique (21) horizontal, ayant une section transversale à développement carré, lequel, d'un côté, est connecté au motoréducteur (12) et, de l'autre côté, peut être inséré dans une bague (50) solidaire de l'extrémité de l'arbre (5) qui se trouve du côté du motoréducteur (12) et pourvue d'une rainure radiale (51) destinée à loger, dans la condition d'engagement, une goupille (21) faisant en saillie d'un manchon (23) avec un ressort antagoniste (24), lequel est enfilé sur ledit profilé (21): une poignée (25) étant prévue, solidaire de l'extrémité libre dudit profilé (21), pour en permettre l'actionnement manuel.

## Claims

1. Device for actuating the rotation of a set of steps (1) for vehicles such as, for example, camping cars, caravans etc., the said set of steps consisting of an upper step (2) solid with guides (3) in which a lower step (4) engages in a sliding manner, characterized in that the said guides (3), with which the said upper step (2) is solid, are connected in a rotating manner with a shaft (5) geared to rotate from motorized means (6) fixed on a support (7) solid with the said vehicle, articulated means (8,9) connected functionally to the shaft (5) and the lower step (4) being provided to displace the said step along the said guides (3) and to cause rotation of the said guides (3) around the said shaft (5).

2. Device for actuation according to claim 1, in which the said articulated means (8,9) consist of at least one arm (8), locked on to the said shaft (5) and connected in a rotating way with the connecting rod (9) mounted on a pivot on the said lower step (4), which is why the said connecting rod (9), following rotation of the said arm (8) guides the said lower step (4) along the said guides (3) until the said connecting rod (9) butts up against the said shaft (5) causing the rotation of the said upper step (2) and the said guides.

3. Device for actuating the rotation of a set of steps according to claims 1 and 2, in which the said arms (8) locked on to the said shaft (5) and the said connecting rods (9) are two in number.

4. Device for actuation according to one of the preceding claims, in which the said motorized means consist of a geared down motor (6) with transmission of the movement to the said shaft (5) by means of an endless screw coupling and a helical wheel.

5. Device for actuating the rotation according to the preceding claims, in which the said motor (6) has means of torque limitation to prevent accidents.

6. Device according to claims 1 and 4, characterized in that it includes means for engaging and disengaging the shaft (5) for the steps, consisting of a horizontal metal profile (21), having a square transverse section which, on the one side, is connected to the geared down motor (12) and, on the other side may be inserted into a ring (50) solid with the end of the shaft (5) which is situated at the side of the geared down motor (12) and provided with a radial groove (51) intended wo engage with a pin (21) in the engaged position, making a projection of a sleeve (23) with an opposing spring (24) which is attached to the said profile (21): a handle (25) being provided, solid with the free end of the said profile (21) to enable manual actuation to be carried out.

## Patentansprüche

1. Betätigungsvorrichtung zum Drehen einer Treppe (1) für Fahrzeuge, wie z.B. für Camping-Fahrzeuge und -Anhänger usw., wobei die Treppe eine obere Stufe (2) umfaßt, die mit Führungen (3) fest verbunden ist, in die in gleitender Weise eine untere Stufe (4) eingreift, dadurch **gekennzeichnet,** daß die Führungen (3), an denen die obere Stufe (2) festgemacht ist, in drehbarer Weise mit einer Welle (5) verbunden sind, die von Motoreinrichtungen (6) drehend angetrieben wird, die an einem am Fahrzeug angebrachten Träger (7) befestigt sind, und daß Gelenkeinrichtungen (8, 9) vorgesehen sind, die in funktioneller Weise mit der Welle (5) und der unteren Stufe (4) verbunden sind, um diese Stufe längs der Führungen (3) zu verschieben und die Führungen (3) zu einer Drehung um die Welle (5) anzutreiben.

2. Betätigungsvorrichtung nach Anspruch 1, bei der die Gelenkeinrichtungen (8, 9) wenigstens einen Arm (8) umfassen, der an der Welle (5) festgelegt ist, und in drehbarer Weise mit einer Pleuelstange (9) verbunden ist, die schwenkbar an der unteren Stufe (4) befestigt ist, so daß die Pleuelstange (9) aufgrund der Drehung des Armes (8) die untere Stufe (4) längs der Führungen (3) soweit verschiebt, bis die Pleuelstange (9) an der Welle (2) zur Anlage kommt und in gleicher Weise wie die obere Stufe (5) und die Führungen (3) zu einer Drehung antreibt.

3. Betätigungsvorrichtung zum Drehen einer Treppe nach den Ansprüchen 1 und 2, bei der zwei an der Welle (5) festgelegte Arme (8) und zwei Pleuelstangen (9) vorhanden sind.

4. Betätigungsvorrichtung nach einem der vorhergehenden Ansprüche, bei der die Motoreinrichtungen ein Motoruntersetzungsgetriebe (6) mit einer Bewegungsübertragung auf die Welle (5) mit Hilfe einer Kupplung mit einer Förderschnecke und einem Schneckenrad umfaßt.

5. Betätigungsvorrichtung zum Drehen nach einem der vorhergehenden Ansprüche, bei der in dem Motor (6) Drehmoment-Begrenzungseinrichtungen als Schutz gegen Unfälle vorgesehen sind.

6. Vorrichtung nach den Ansprüchen 1 und 4, dadurch **gekennzeichnet,** daß sie Mittel zum In- bzw. Außereingrifftreten mit der Antriebswelle (5) für die Stufen aufweist, die ein horizontales Metallprofil (21) umfassen, das einen Querschnitt mit Vierkantabwicklung aufweist und das einerseits mit dem Motoruntersetzungsgetriebe (12) verbunden ist und andererseits in einen Ring (50) eingeführt werden kann, der mit dem sich neben dem Motoruntersetzungsgetriebe (12) befindlichen Ende der Welle (5) fest verbunden und mit einer radialen Rille (51) versehen ist, die dazu dient, im Eingriffszustand einen Stift (21) aufzunehmen, der über eine Buchse (23) mit einer Gegenfeder (24) vorsteht, die auf das Profil (21) aufgeschoben ist, wobei ein Handgriff (25) vorgesehen ist, der mit dem freien Ende des Profils (21) fest verbunden ist, um dessen Betätigung von Hand zu ermöglichen.
